(19) Europäisches Patentamt
European Patent Office
Office européen des brevets

(11) **EP 4 073 870 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **20823752.9**

(22) Anmeldetag: **07.12.2020**

(51) Internationale Patentklassifikation (IPC):
*G01K 1/14* (2021.01)   *H01M 10/48* (2006.01)
*H01M 50/526* (2021.01)   *H01M 50/502* (2021.01)
*H01M 50/204* (2021.01)

(52) Gemeinsame Patentklassifikation (CPC):
**H01M 10/486; G01K 1/14; H01M 10/482;**
**H01M 50/204; H01M 50/502; H01M 50/526;**
H01M 2200/10; Y02E 60/10

(86) Internationale Anmeldenummer:
**PCT/EP2020/084793**

(87) Internationale Veröffentlichungsnummer:
**WO 2021/115979 (17.06.2021 Gazette 2021/24)**

(54) **BATTERIE MIT TEMPERATURMESSEINRICHTUNG**

BATTERY HAVING A TEMPERATURE MEASUREMENT DEVICE

BATTERIE AYANT UN DISPOSITIF DE MESURE DE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2019 DE 102019219602**

(43) Veröffentlichungstag der Anmeldung:
**19.10.2022 Patentblatt 2022/42**

(73) Patentinhaber: **Viessmann Holding International GmbH**
**35108 Allendorf (Eder) (DE)**

(72) Erfinder: **KLEE, Hanspeter**
**35083 Wetter (DE)**

(74) Vertreter: **MERH-IP Matias Erny Reichl Hoffmann Patentanwälte PartG mbB**
**Paul-Heyse-Straße 29**
**80336 München (DE)**

(56) Entgegenhaltungen:
EP-A1- 1 450 422      WO-A1-03/047013
CN-C- 100 472 877      US-A1- 2010 203 368

**Beschreibung**

Die vorliegende Erfindung betrifft eine Batterie mit einer Temperaturmesseinrichtung zum Messen der Temperatur der Batterie an einer Vielzahl von Messpositionen.

Die Offenlegungsschrift DE 10 2016 207 334 A1 offenbart eine Messvorrichtung zum Bestimmen einer Temperatur mit einer mehrlagigen Leiterplatte und einer darauf angeordneten Sensoreinrichtung. Die Leiterlagen sind teilweise flächig überlappend verschachtelt angeordnet.

Eine Temperaturmesseinrichtung für ein Batteriesystem ist aus dem europäischen Patent EP 2 736 100 B1 bekannt. Auf einer Leiterplatte sind mehrere Infrarot-Temperatursensoren zum Messen der Temperatur von Batteriezellen angeordnet. Die Sensoren sind mechanisch von den Batteriezellen entkoppelt.

Die internationale Patentanmeldung WO 2016/153 267 A1 beschreibt einen Akkupack mit mindestens einer Batteriezelle, einem Kühlkörper zum Abführen von Wärme, die von der Batteriezelle erzeugt wird, einer Leiterplatte mit einem Abschnitt, der den Kühlkörper berührt, und einem Temperatursensor, der auf der Leiterplatte angebracht ist, um die vom Kühlkörper zur Leiterplatte geleitete Wärme zu messen.

Eine weitere Vorrichtung zum Messen einer Temperatur eines Akkupacks wird in der koreanischen Patentanmeldung KR 10 2018 0 043 875 A beschrieben. Ferner offenbart die WO 2015/019 511 A1 eine Batterie mit einer Vielzahl von Batteriezellen und einer Leiterplatte mit einem Temperatursensor zum Messen einer Temperatur der Batterie. Weitere relevante Dokumente sind US 2010/203368 A1, EP 1 450 422 A1 und CN 100 472 877 C.

Eine gattungsgemäße Batterie dient insbesondere als Energiespeicher zum Stromversorgung eines Gebäudes. Eine solche Batterie umfasst eine Vielzahl von Einzelzellen, die seriell oder parallel geschaltet sein können. Insbesondere bei Batterien mit einer Vielzahl von Einzelzellen ist es wichtig, die Temperatur der Zellen zu überwachen. Eine durch die Erfindung zu lösende Aufgabe besteht darin, eine Batterie mit einer Temperaturmesseinrichtung bereitzustellen, welche die Temperatur möglichst aller Zellen der Batterie überwachen kann.

Gemäß einem Aspekt der Erfindung wird die Aufgabe durch eine elektrische Batterie nach Anspruch 1 gelöst. Eine erfindungsgemäße elektrische Batterie umfasst mindestens eine Temperaturmesseinrichtung. Weitere Aspekte der Erfindung sind Gegenstand der Unteransprüche, der Zeichnungen und der folgenden Beschreibung von Ausführungsbeispielen.

Eine Temperaturmesseinrichtung der erfindungsgemäßen Batterie umfasst eine mehrschichtige Leiterplatte als Trägerelement mit einer oberen Leiterschicht und einer unteren Leiterschicht. Insbesondere ist die Leiterplatte aus einem wärmedämmenden Material gefertigt, so dass sie eine geringe Wärmekapazität besitzt Die Temperaturmesseinrichtung selbst nimmt somit nur eine geringe Wärmemenge von der zu messenden Batterie auf. Hierdurch kann die Genauigkeit und Reaktionsgeschwindigkeit der Temperaturmessung verbessert werden.

Die Temperaturmesseinrichtung umfasst eine Vielzahl von Temperatursensoren, die jeweils konfiguriert sind, ein temperaturabhängiges Messsignal zu erzeugen. Indem eine Vielzahl von Sensoren bereitgestellt wird, kann die Temperatur einer Batterie mit einer Vielzahl von Einzelzellen an einer Vielzahl von Messpunkten überwacht werden. Somit kann eine besonders zuverlässige Temperaturüberwachung sichergestellt werden. Die Temperatursensoren sind insbesondere temperaturabhängige Widerstände, beispielsweise NTC-Thermistoren (englisch: "Negative Temperature Coefficient Thermistor"). Solche Widerstände leiten einen elektrischen Strom bei höheren Temperaturen besser als bei niedrigeren Temperaturen. NTC- Thermistoren können besonders kostengünstig sein, eine hohe Messgenauigkeit haben und sehr zuverlässig sein. Der Einsatz ist jedoch nicht auf NTC-Thermistoren beschränkt, PTC-Thermistoren oder andere Chip Lösungen sind ebenfalls als Messmittel einsetzbar.

Die Vielzahl von Temperatursensoren ist vorzugsweise entlang einer Längsrichtung der Leiterplatte in gleichmäßigen Abständen auf der Leiterplatte angeordnet. Die Positionen der Sensoren können insbesondere durch die Anordnung der Einzelzellen in der zu messenden Batterie vorgegeben sein. Durch eine gleichmäßige Anordnung der Sensoren auf der Leiterplatte kann insbesondere eine gleichmäßige Temperaturverteilung der Einzelzellen gemessen und überwacht werden.

Die Leiterplatte der Temperaturmesseinrichtung umfasst eine Vielzahl von Befestigungsmitteln zum Befestigen der Leiterplatte auf einer Batterie. Insbesondere sind die Befestigungsmittel jeweils auf Höhe der Sensoren angeordnet, so dass ein direkter Kontakt mit der zu messenden Stelle der Batterie hergestellt werden kann.

Die Temperaturmesseinrichtung umfasst einen mehrpoligen Anschluss zum Auslesen der Messsignale. Der mehrpolige Anschluss weist insbesondere eine Vielzahl von Signalpolen auf, die jeweils über getrennte Leiterbahnen in der oberen Leiterschicht mit einem der Vielzahl von Temperatursensoren elektrisch verbunden sind. Ferner weist der mehrpolige Anschluss vorzugsweise mindestens einen Erdungspol (GND) auf, der über mindestens eine Leiterbahn mit jedem der Vielzahl von Temperatursensoren elektrisch verbunden ist. Die Leiterbahnen in der oberen Leiterschicht können also derart vorgesehen sein, dass ein erster Kontakt eines jeden Temperatursensors mit einer Grundierungsleiterbahn verbunden ist und ein zweiter Kontakt eines jeden Temperatursensors mit einer separaten Signalleiterbahn verbunden ist, so dass für jeden Temperatursensor ein separater Temperaturmesswert oder Widerstandswert ausgelesen werden kann.

Jeder der Vielzahl von Temperatursensoren ist jeweils auf einem ersten isolierten Bereich der oberen Leiterschicht angeordnet. Dieser erste isolierte Bereich dient insbesondere als Wärmekontaktfläche mit dem jeweiligen Temperatursensor. Der erste isolierte Bereich ist elektrisch gegenüber den Leiterbahnen isoliert.

Die untere Leiterschicht weist für jeden Temperatursensor einen zweiten isolierten Bereich als Wärmekontaktfläche mit dem zu messenden Gegenstand auf. Die Wärmekontaktflächen in der unteren Leiterschicht sind derart angeordnet, dass sie direkt auf die zu messende Oberfläche einer Batterie positioniert werden können und dort in Wärmekontakt mit der Oberfläche stehen.

Jeder erste isolierte Bereich ist jeweils über mindestens eine Durchkontaktierung wärmeleitend mit einem entsprechenden zweiten isolierten Bereich verbunden. Die Durchkontaktierungen durch die isolierende Leiterplatte stellen eine wärmeleitende Verbindung zwischen der Wärmekontaktfläche, die direkt mit der Batterie in Kontakt gebracht wird, und dem jeweiligen Temperatursensor her. Insbesondere ist jeder erste isolierte Bereich jeweils über eine Vielzahl von Durchkontaktierungen wärmeleitend mit einem entsprechenden zweiten isolierten Bereich verbunden, beispielsweise über drei oder mehr Durchkontaktierungen. Somit kann die Wärmeleitung zwischen den Temperatursensoren mit der jeweiligen Wärmekontaktfläche verbessert werden, so dass eine genaue Messung der Temperatur an der Unterseite der Leiterplatte ermöglicht wird.

Die Temperatursensoren sind vorzugsweise jeweils von einem wärmeleitenden Mantel umgeben, das mit dem jeweiligen ersten isolierten Bereich wärmeleitend verbunden ist. Der wärmeleitende Mantel kann den Wärmeübertrag vom ersten isolierten Bereich auf den Temperatursensor verbessern. Insbesondere wird die Wärme gleichmäßig über den gesamten Umfang des Temperatursensors verteilt, so dass eine genauere Temperaturmessung ermöglicht werden kann.

Eine bevorzugte Leiterplatte weist eine Vielzahl von Ausfräsungen auf. Die Ausfräsungen verringern die Gesamtoberfläche sowie die Gesamtmasse der Temperaturmesseinrichtung. Hierdurch kann eine Gesamtwärmekapazität der Temperaturmesseinrichtung reduziert werden, was zu einer verbesserten Messgenauigkeit führen kann, da die Temperaturmesseinrichtung weniger Wärme von der zu messenden Batterie aufnehmen kann. Ferner können die Ausfräsungen ein Kühlen der Einzelzellen an Luft ermöglichen, da ein Abdecken der Einzelzellen vermieden wird. Vorzugsweise dienen die Ausfräsungen auch zum Arretieren der Temperaturmesseinrichtung auf der Batterie. Weiter vorzugsweise sind die Ausfräsungen derart angeordnet, dass Zellenhalter der Einzelzellen durch die Ausfräsungen herausragen können, so dass die Leiterplatte direkt auf den Einzelzellen positioniert werden kann, um einen direkten Wärmekontakt zu erreichen.

Bei der erfindungsgemäßen elektrischen Batterie, stehen die zweiten isolierten Bereiche jeweils mit mindestens einem Zellverbinder der Batterie wärmeleitend in Kontakt.

Eine erfindungsgemäße elektrische Batterie weist vorzugsweise eine Vielzahl von nebeneinander angeordneten Reihen von Einzelzellen auf. Beispielsweise können die Einzelzellen in einer Matrix von N Einzelzellen in M Reihen in der Batterie angeordnet sein, wobei N und M natürliche Zahlen größer als oder gleich zwei sind.

Eine bevorzugte Batterie weist eine Vielzahl von Temperaturmesseinrichtung auf, wobei für jeweils zwei Reihen von Einzelzellen eine Temperaturmesseinrichtung vorgesehen ist. Insbesondere überwacht jeder der Vielzahl von Temperatursensoren die Temperatur von zwei bis vier Einzelzellen.

Eine bevorzugte elektrische Batterie weist eine Elektronik zum Auswerten der Messsignale der Temperatursensoren auf. Hierzu kann die Elektronik über ein mehrpoliges Kabel mit dem mehrpoligen Anschluss der mindestens einen Temperaturmesseinrichtung verbunden sein. Vorzugsweise werden die einzelnen von den Temperatursensoren gemessenen Temperaturen ratiometrisch ermittelt. Das bedeutet, dass insbesondere die Verhältnisse der gemessenen Signale miteinander bestimmt werden, wobei beispielsweise eine Abweichung von einem Sollwert oder einem Mittelwert, beziehungsweise das Überschreiten eines Grenzwerts ermittelt werden kann.

## Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

**Figur 1**  Fig. 1 zeigt eine Schnittansicht eines Ausführungsbeispiels einer Batterie mit einer erfindungsgemäßen Temperaturmesseinrichtung.

**Figur 2**  Fig. 2a zeigt eine Draufsicht einer erfindungsgemäßen Temperaturmesseinrichtung und Fig. 2b zeigt eine entsprechende Ansicht von unten.

**Figur 3**  Fig. 3 zeigt ein beispielhaftes Schaltbild einer erfindungsgemäßen Temperaturmesseinrichtung.

**Figur 4**  Fig. 4a und 4b zeigen zwei verschiedene Ausführungsbeispiele der erfindungsgemäßen Temperaturmesseinrichtung.

**Figur 5**  Fig. 5 zeigt eine Schnittansicht eines weiteren Ausführungsbeispiels einer Batterie mit einer erfindungsgemäßen Temperaturmesseinrichtung mit Kompriband.

**Ausführliche Beschreibung der Erfindung anhand von Ausführungsbeispielen**

Bei der nachfolgenden Beschreibung einer bevorzugten Ausführungsform der vorliegenden Erfindung bezeichnen gleiche Bezugszeichen gleiche oder vergleichbare Komponenten.

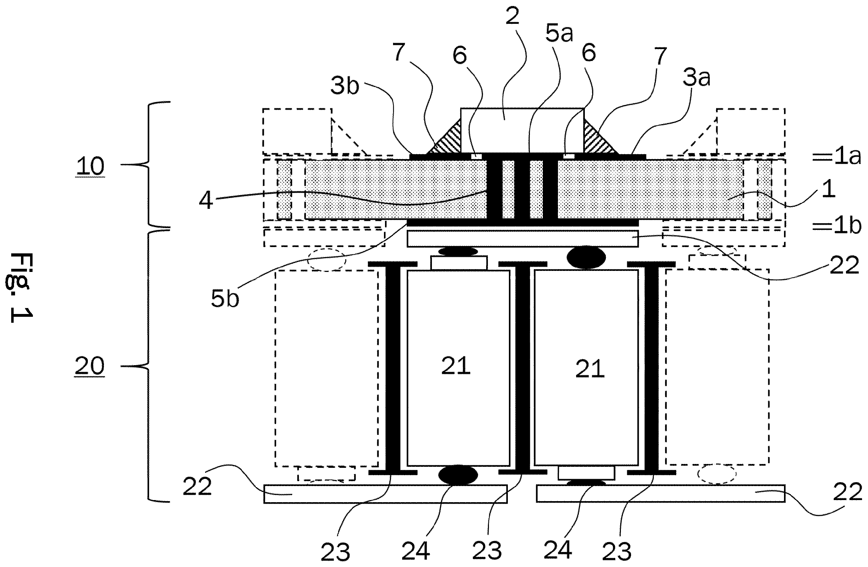

Fig. 1 zeigt eine Schnittansicht eines Ausführungsbeispiels einer Batterie 20 mit einer erfindungsgemäßen Temperaturmesseinrichtung 10. Die Batterie 20 weist eine Vielzahl von Einzelzellen 21 auf, die in einer Reihe angeordnet sind. Die Einzelzellen 21 sind jeweils paarweise über Löt- oder Schweißstellen 24 mit einem Zellverbinder 22 verbunden und in Serie geschaltet. Zwischen den Einzelzellen 21 sind Zellhalter 23 angeordnet, welche die Einzelzellen 21 mechanisch stützen. Eine erfindungsgemäße Batterie 20 kann eine Vielzahl von Reihen von Einzelzellen 21 aufweisen. Insbesondere kann eine Batterie 20 als Matrix von M Reihen mit jeweils N Einzelzellen 21 aufgebaut sein, wobei M und N natürlich Zahlen sind, die beispielsweise zwischen zehn und zwanzig liegen, insbesondere sechzehn.

In Fig. 1 sind mittig zwei Einzelzellen 21 dargestellt, wobei die linke mit Pluspol nach oben und die rechte mit Pluspol nach unten angeordnet sind. Die beiden Einzelzellen 21 sind durch Löt- oder Schweißstellen 24 mit dem oberen Zellverbinder 22 verbunden und somit in Serie geschaltet. Rechts und links von den mittig dargestellten Einzelzellen 21 sind jeweils gestrichelt weitere Einzelzellen 21 dargestellt, um anzudeuten, dass nur ein Ausschnitt aus einer größeren Vielzahl von Einzelzellen 21 gezeigt wird.

Auf der Batterie 20 ist eine Temperaturmesseinrichtung 10 angeordnet. Die Temperaturmesseinrichtung 10 weist eine mehrschichtige Leiterplatte 1 als Trägerelement mit einer oberen Leiterschicht 1a und einer unteren Leiterschicht 1b auf. Die Leiterplatte 1 ist aus einem wärmedämmenden Material, beispielsweise Kunststoff oder faserverstärktem Kunststoff oder auch handelsüblichem FR4 (Klasse schwer entflammbarer und flammenhemmender Verbundwerkstoffe bestehend aus Epoxidharz und Glasfasergewebe, "Flame Retardant 4") gefertigt und hat eine Dicke von einem bis mehreren Millimetern. Die Leiterschichten 1a, 1b haben typischerweise eine Dicke von einigen zehn bis einigen 100 Mikrometern, beispielsweise 35 $\mu$m, und sind aus einem leitfähigen Material, wie zum Beispiel Kupfer.

Auf der Leiterplatte 1 ist eine Vielzahl von Temperatursensoren 2 angeordnet, die jeweils ein temperaturabhängiges Messsignal erzeugen. Der in der Mitte der Fig. 1 gezeigte Temperatursensor 2 ist auf einem ersten isolierten Bereich 5a der oberen Leiterschicht 1a angeordnet ist. Dieser isolierte Bereich 5a ist durch eine elektrische Isolation 6 vom Rest der oberen Leiterschicht 1a getrennt. Der Temperatursensor 2 ist direkt auf dem ersten isolierten Bereich 5a angeordnet, so dass der Temperatursensor 2 die Temperatur des ersten isolierten Bereichs 5a misst.

Unter dem ersten isolierten Bereich 5a auf der Unterseite der Leiterplatte 1 befindet sich ein zweiter isolierter Bereich 5b, der als Wärmekontaktfläche dient. Die Wärmekontaktfläche liegt direkt auf einem Zellverbinder 22 der Batterie 20 auf. Der Abstand in der Zeichnung dient nur der besseren Darstellung. Für einen verbesserten Wärmeübertrag zwischen Zellverbinder 22 und Wärmekontaktfläche kann eine Wärmeleitpaste verwendet werden.

Der erste isolierte Bereich 5a ist über drei Durchkontaktierungen 4 wärmeleitend mit dem darunter liegenden zweiten isolierten Bereich 5b verbunden, so dass die von den Einzelzellen 21 auf den Zellverbinder 22 abgegebene Wärme über die Wärmekontaktfläche 5b und die Durchkontaktierungen 4 direkt an den ersten isolierten Bereich 5a und somit an den Temperatursensor 2 übertragen wird. Somit kann mit dem auf der Oberseite der Leiterplatte 1 angeordneten Temperatursensor 2 eine sehr genaue Messung der Temperatur der darunterliegenden Einzelzellen 21 erfolgen.

Die Durchkontaktierungen 4 können wie die Leiterschichten 1a, 1b aus Kupfer sein. Kupfer hat je nach Reinheit eine relativ hohe Wärmeleitfähigkeit von ca. 240 bis 400 W/(m K). Kunststoffe haben dagegen eine sehr geringe Wärmeleitfähigkeit von weniger als 1 W/(m K). Somit kann eine direkte Wärmeleitung von der Wärmekontaktfläche 5b (Messstelle) zum Temperatursensor 2 ohne Wärmeverluste in der Leiterplatte 1 erfolgen. Ferner hat Kupfer eine relativ geringe Wärmekapazität von ca. 0,382 kJ/(kg K), so dass bei hoher Wärmeleitfähigkeit eine entsprechend hohe Temperaturleitfähigkeit a folgt. Die Temperaturleitfähigkeit a berechnet sich als Quotient aus Wärmeleitfähigkeit $\lambda$ und Wärmekapazität c mal Dichte $\rho$:

$$a = \frac{\lambda}{\rho \cdot c}$$

Die Temperaturleitfähigkeit a quantifiziert die zeitliche Veränderung der räumlichen Verteilung der Temperatur durch Wärmeleitung als Folge eines Temperaturgefälles. Das bedeutet, dass die Temperaturmessung aufgrund der hohen Temperaturleitfähigkeit des Materials zwischen Temperatursensor 2 und Wärmekontaktfläche 5b schnell und verlustarm erfolgen kann.

Es versteht sich, dass statt Kupfer auch jedes andere geeignete Material verwendet werden kann.

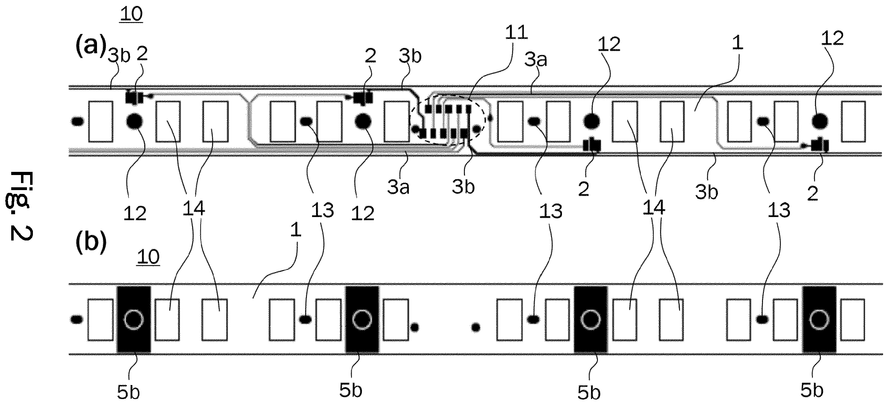

Wie in Fig. 1 dargestellt ist der Temperatursensor 2 durch Lötstellen 7 auf der Leiterplatte 1 befestigt. Die Lötstellen 7 stellen ferner den elektrischen Kontakt zu den Leiterbahnen 3a und 3b her, die mit einem mehrpoligen Anschluss 11 zum Auslesen der Messsignale verbunden sind (siehe Fig. 2).

In einer nicht dargestellten Ausführung können die Temperatursensoren 2 jeweils von einem wärmeleitenden Mantel umgeben sein, der mit dem jeweiligen ersten isolierten Bereich 5a wärmeleitend verbunden ist.

Ein solcher wärmeleitende Mantel kann den Wärmeübertrag vom ersten isolierten Bereich 5a auf den Temperatursensor 2 verbessern. Insbesondere wird die Wärme gleichmäßig über den gesamten Umfang des Temperatursensors 2 verteilt, so dass eine genauere Temperaturmessung ermöglicht wird.

Fig. 2a zeigt eine Draufsicht einer erfindungsgemäßen Temperaturmesseinrichtung 10 und Fig. 2b zeigt eine entsprechende Ansicht von unten. Gezeigt ist jeweils nur ein mittiger Ausschnitt der Temperaturmesseinrichtung 10, so dass vier Temperatursensoren 2 zu sehen sind. Links und rechts geht die Temperaturmesseinrichtung 10 weiter als in der Darstellung zu sehen. Insgesamt weist die beispielhafte Temperaturmesseinrichtung 10 acht Temperatursensoren 2 auf.

Wie in Fig. 2 zu sehen, weist die Temperaturmesseinrichtung 10 eine Vielzahl von Befestigungsmitteln 12 zum Befestigen der Leiterplatte 1 auf einer Batterie (20) auf. Die Befestigungsmittel 12 sind beispielsweise als Bohrungen in der Leiterplatte 1 ausgeführt, die sich direkt neben den Temperatursensoren 2 befinden, so dass die Temperaturmesseinrichtung 10 an der Batterie 20 festgeschraubt werden kann, wobei ein fester und direkter Kontakt der Wärmekontaktflächen 5b mit den Zellverbindern 22 der Batterie 20 sichergestellt werden kann.

In Fig. 2a ist mittig der mehrpolige Anschluss 11 zum Auslesen der Messsignale dargestellt. In dem gezeigten Ausführungsbeispiel handelt es sich um einen 10-poligen Anschluss 11 mit acht Signalpolen und zwei Erdungspolen. Die Signalpole sind jeweils über getrennte erste Leiterbahnen 3a in der oberen Leiterschicht 1a mit einem ersten Anschluss der Temperatursensoren 2 verbunden. Die Erdungspole sind jeweils über gemeinsame zweite Leiterbahnen 3b mit einem zweiten Anschluss der Temperatursensoren 2 verbunden.

Über den mehrpoligen Anschluss 11 und ein entsprechendes mehrpoliges Kabel kann die Temperaturmesseinrichtung 10 mit einer Elektronik zum Auswerten der Messsignale der Temperatursensoren 2 verbunden werden. Gemäß einem Ausführungsbeispiel werden die einzelnen von den Temperatursensoren 2 gemessenen Temperaturen ratiometrisch von einer Elektronik ermittelt. Das bedeutet, dass insbesondere die Verhältnisse der gemessenen Signale zueinander bestimmt werden, wobei beispielsweise eine Abweichung von einem Sollwert oder einem Mittelwert, beziehungsweise das Überschreiten eines Grenzwerts ermittelt werden kann.

Die Leiterplatte 1 weist ferner eine Vielzahl von rechteckigen Ausfräsungen 14 auf. Die Ausfräsungen 14 verringern die Gesamtoberfläche sowie die Gesamtmasse der Temperaturmesseinrichtung 10. Hierdurch wird eine Gesamtwärmekapazität der Temperaturmesseinrichtung 10 reduziert, was zu einer verbesserten Messgenauigkeit führt, da die Temperaturmesseinrichtung 10 weniger Wärme von der zu messenden Batterie 20 aufnimmt.

Ferner ermöglichen die Ausfräsungen 14 eine Luftzufuhr und somit Kühlen der Einzelzellen 21 an Luft. Des Weiteren dienen die Ausfräsungen 14 auch zum Arretieren der Temperaturmesseinrichtung 10 auf der Batterie 20. Darüber hinaus sind die Ausfräsungen derart angeordnet, dass Zellenhalter 23 der Einzelzellen durch die Ausfräsungen 14 herausragen können, so dass die Leiterplatte 1 direkt auf den Zellverbindern 22 der Einzelzellen 21 positioniert werden kann, um einen direkten Wärmekontakt zu erreichen. Zusätzlich weist die Leiterplatte 1 Arretierbohrungen 13 zum Befestigen der Temperaturmesseinrichtung 10 auf Batterie 20 auf.

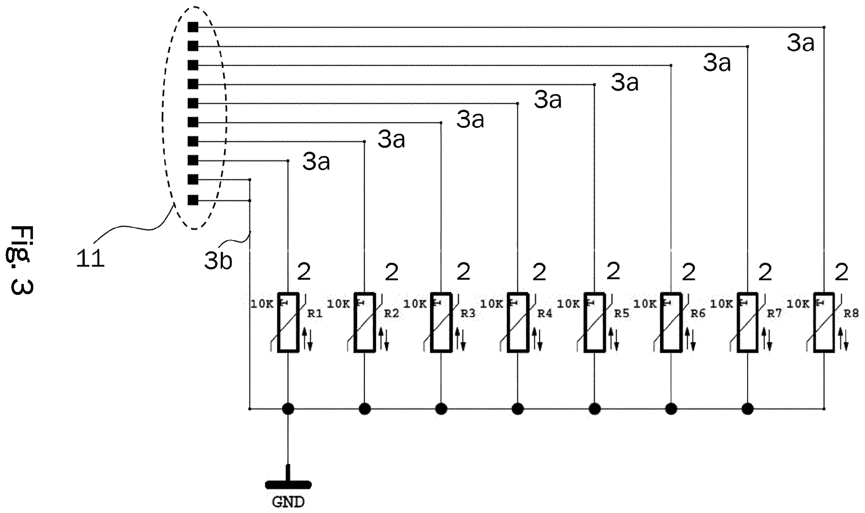

Fig. 3 zeigt ein beispielhaftes Schaltbild der Temperaturmesseinrichtung 10. Vom 10-poligen Anschluss 11 gehen acht Signalleitungen 3a zu den acht Temperatursensoren 2. Ferner sind zwei Erdungsleitungen 3b zum Erden der Temperatursensoren 2 vorgesehen. Die Temperatursensoren 2 sind als NTC-Thermistoren ausgeführt, deren Widerstand als Messwert der Temperatur bestimmt werden kann.

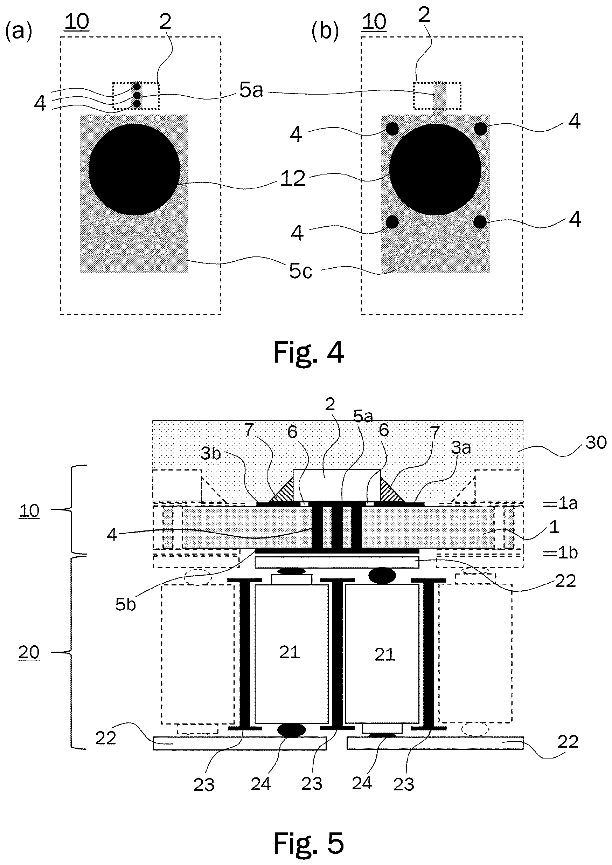

Fig. 4a und 4b zeigen jeweils einen Ausschnitt der Temperaturmesseinrichtung 10 in Draufsicht ähnlich wie Fig. 2a, wobei ein Ausschnitt jeweils um einen Temperatursensor 2 gezeigt ist. In Fig. 2a gezeigt Details, wie z.B. die Leiterbahnen 3a und 3b wurden in Fig. 4 der Übersichtlichkeit halber weggelassen.

Fig. 4a und 4b zeigen zwei verschiedene Ausführungsbeispiele mit unterschiedlicher Anordnung der Durchkontaktierungen 4. In Fig. 4a sind drei Durchkontaktierungen 4 direkt unter dem Temperatursensor 2 angeordnet. Diese Ausführung entspricht somit im Wesentlichen dem in Fig. 1 gezeigten Beispiel. Die Durchkontaktierungen 4 können beispielweise mit Kupfer gefüllte Vias sein. Die Durchkontaktierungen 4 können aber auch als Löcher ausgeführt sein, bei denen lediglich die Wände mit einer leitenden Schicht, z.B. aus Kupfer, bedeckt sind, wobei jeweils ein Durchgangsloch bestehen bleibt, durch das Luft strömen kann. Der erste isolierte Bereich 5a ist in Fig. 4a und 4b jeweils als gestrichelte Fläche dargestellt.

Fig. 4b zeigt eine alternative beispielhafte Ausführung, bei der die Durchkontaktierungen 4 nicht unter dem Temperatursensor 2 sondern daneben angeordnet sind. Außerdem ist neben dem Temperatursensor 2 ein dritter isolierter Bereich 5c angeordnet, dessen Oberfläche im Wesentlich dem zweiten isolierten Bereich 5b auf der Unterseite der Temperaturmesseinrichtung 10 (siehe Fig. 2b) entspricht. Der dritte isolierte Bereich 5c kann beispielsweise als Kupferfläche vorgesehen sein. Bei dieser Ausführung können die Durchkontaktierungen 4 einen größeren Durchmesser aufweisen. In Fig. 4b sind beispielhaft vier Durchkontaktierungen 4 dargestellt. Aufgrund der größeren zur Verfügung stehenden Fläche können auch mehr als vier Durchkontaktierungen 4 vorgesehen sein.

Ähnlich wie im Beispiel der Fig. 4a können die Durchkontaktierungen 4 der alternativen beispielhaften Ausführung mit Kupfer gefüllte Vias sein oder als Löcher ausgeführt sein, bei denen lediglich die Wände mit einer leitenden Schicht, z.B. aus Kupfer, bedeckt sind, wobei jeweils ein Durchgangsloch bestehen bleibt, durch das Luft strömen kann. Aufgrund des größeren Durchmessers im Vergleich zu Fig. 4a können die Durchgangslöcher größer sein, so dass ein verbesserter Luftaustausch stattfinden kann. Außerdem kann eine verbesserte Wärmeleitfähigkeit durch die Durchkontaktierungen 4 erreicht werden. Ferner können Kapillareffekte verringert und somit eine Batauung der Durchgangslöcher vermieden werden.

Der dritte isolierte Bereich 5c kann besonders gut Wärme vom zweiten isolierten Bereich 5b aufnehmen und über die Verbindung zum ersten isolierten Bereich 5a an den Temperatursensor 2 weitergeben. Somit kann ein verbesserter Wärmeübertrag von der Unterseite der Temperaturmesseinrichtung 10 zur Oberseite mit den Temperatursensoren 2 erreicht werden, so dass die Messung der Temperatur verbessert werden kann.

Fig. 5 zeigt ein weiteres Ausführungsbeispiel einer erfindungsgemäßen Batterie 20, wobei im Unterschied zum Ausführungsbeispiel der Fig. 1 ein Kompriband 30 auf der Temperaturmesseinrichtung 10 angeordnet ist. Insbesondere kann das Kompriband 30 auf der Leiterplatte 1 der Temperaturmesseinrichtung 10 aufgeklebt sein.

Das Kompriband 30 ist elektrisch und thermisch isolierend und abdichtend. Es kann beispielsweise ein vorkomprimiertes, imprägniertes Schaumstoffdichtungsband, z.B. auf Polyurethanbasis sein. Alternativ kann es sich z.B. um ein Kompressionsband aus Kautschuk handeln. Es kann mechanisch verformt werden, so dass es sich der Oberfläche der Temperaturmesseinrichtung 10 anpassen kann, und dehnt sich nach Komprimierung von selbst wieder aus. Durch einen Gehäusedeckel der Batterie 20 kann das Kompriband 30 mechanisch gegen die Leiterplatte 1 der Temperaturmesseinrichtung 10 gedrückt werden, so dass es auch ohne Klebstoff fest auf der Leiterplatte 1 aufliegt.

Das Kompriband 30 kann die Temperaturmesseinrichtung 10 in vorteilhafter Weise luftdicht abdecken, so dass eine schädliche Bildung von Kondenswasser auf der Temperaturmesseinrichtung 10 verhindert werden kann. Außerdem dient das Kompriband 10 als thermische Isolierung gegenüber der Umgebungsluft, wodurch die Genauigkeit der Temperaturmessung verbessert werden kann, da die Temperatur der Leiterplatte 1 nicht mehr (oder zumindest in geringem Maße) durch die Umgebungsluft beeinflusst wird.

**Patentansprüche**

1. Elektrische Batterie (20) mit einer Vielzahl von Einzelzellen (21), wobei die Batterie (20) mindestens eine Temperaturmesseinrichtung (10) aufweist, wobei die mindestens eine Temperaturmesseinrichtung (10) umfasst:

   eine mehrschichtige Leiterplatte (1) als Trägerelement mit einer oberen Leiterschicht (1a) und einer unteren Leiterschicht (1b);
   eine Vielzahl von Temperatursensoren (2), die jeweils konfiguriert sind, ein temperaturabhängiges Messsignal zu erzeugen;
   einen mehrpoligen Anschluss (11) zum Auslesen der Messsignale, wobei:

   jeder der Vielzahl von Temperatursensoren (2) jeweils auf einem ersten isolierten Bereich (5a) der oberen Leiterschicht (1a) angeordnet ist;
   die untere Leiterschicht (1b) für jeden Temperatursensor (2) einen zweiten isolierten Bereich (5b) als Wärmekontaktfläche aufweist;
   jeder erste isolierte Bereich (5a) jeweils über mindestens eine Durchkontaktierung (4) wärmeleitend mit einem entsprechenden zweiten isolierten Bereich (5b) verbunden ist,
   wobei die zweiten isolierten Bereiche (5b) jeweils mit mindestens einem Zellverbinder (22) der Batterie (20) wärmeleitend in Kontakt stehen.

2. Elektrische Batterie (20) nach Anspruch 1, wobei der mehrpolige Anschluss (11):

   eine Vielzahl von Signalpolen aufweist, die jeweils über getrennte Leiterbahnen (3a) in der oberen Leiterschicht (1a) mit einem der Vielzahl von Temperatursensoren (10) elektrisch verbunden sind; und
   mindestens einen Erdungspol aufweist, der über mindestens eine Leiterbahn (3b) mit jedem der Vielzahl von Temperatursensoren (10) elektrisch verbunden ist.

3. Elektrische Batterie (20) nach Anspruch 1 oder 2, wobei jeder erste isolierte Bereich (5a) jeweils über eine Vielzahl von Durchkontaktierungen (4) wärmeleitend mit einem entsprechenden zweiten isolierten Bereich (5b) verbunden ist

4. Elektrische Batterie (20) nach mindestens einem der vorhergehenden Ansprüche, wobei:

   die Leiterplatte (1) aus einem Kunststoff, einem faserverstärkten Kunststoff oder einem schwer entflammbaren und flammenhemmenden Verbundwerkstoff bestehend aus Epoxidharz und Glasfasergewebe gefertigt ist; und/oder
   die Temperaturmesseinrichtung (10) ferner eine Vielzahl von Befestigungsmitteln (12) zum Befestigen der Leiterplatte (1) auf einer Batterie (20) aufweist.

**5.** Elektrische Batterie (20) nach mindestens einem der vorhergehenden Ansprüche, wobei die Temperatursensoren (2) jeweils von einem wärmeleitenden Mantel umgeben sind, der mit dem jeweiligen ersten isolierten Bereich (5a) wärmeleitend verbunden ist.

**6.** Elektrische Batterie (20) nach mindestens einem der vorhergehenden Ansprüche, wobei die Leiterplatte (1) eine Vielzahl von Ausfräsungen (14) aufweist.

**7.** Elektrische Batterie (20) nach Anspruch 1, wobei:

die Batterie (20) eine Vielzahl von nebeneinander angeordneten Reihen von Einzelzellen (21) aufweist; und
jeder der Vielzahl von Temperatursensoren (2) zum Messen der Temperatur einer Vielzahl von Einzelzellen (21) aus benachbarten Reihen vorgesehen ist.

**8.** Elektrische Batterie (20) nach Anspruch 1 oder 7, wobei die einzelnen von den Temperatursensoren (2) gemessenen Temperaturen ratiometrisch ermittelt werden.

**9.** Elektrische Batterie (20) nach mindestens einem der vorhergehenden Ansprüche, wobei auf einer Oberseite der Temperaturmesseinrichtung (10) ein Kompriband (30) angeordnet ist.

**10.** Elektrische Batterie (20) nach mindestens einem der vorhergehenden Ansprüche, wobei die Vielzahl von Durchkontaktierungen (4) zwischen einem dritten isolierten Bereich (5c) auf der oberen Leiterschicht (1a) und dem zweiten isolierten Bereich (5b) angeordnet ist, wobei der dritte isolierte Bereich (5c) jeweils versetzt neben einem Temperatursensor (2) angeordnet ist.

**Claims**

**1.** An electric battery (20) with a plurality of individual cells (21), wherein the battery (20) has at least one temperature measuring device (10), wherein the at least one temperature measuring device (10) comprises:

a multilayer printed circuit board (1) as a carrier element with an upper conductor layer (1a) and a lower conductor layer (1b);
a plurality of temperature sensors (2), which are each configured to generate a temperature-dependent measurement signal;
a multipolar connection (11) for reading out the measurement signals, wherein:

each of the plurality of temperature sensors (2) is in each case arranged on a first insulated region (5a) of the upper conductor layer (1a);
the lower conductor layer (1b) has a second insulated region (5b) as a thermal contact surface for each temperature sensor (2);
each first insulated region (5a) is in each case thermally conductively connected to a corresponding second insulated region (5b) via at least one plated-through hole (4), wherein the second insulated regions (5b) are in each case thermally conductively in contact with at least one cell connector (22) of the battery (20).

**2.** The electric battery (20) according to Claim 1, wherein the multipolar connection (11):

has a plurality of signal poles, which are in each case electrically connected to one of the plurality of temperature sensors (10) via separate conductor tracks (3a) in the upper conductor layer (1a); and
has at least one ground pole, which is electrically connected to each of the plurality of temperature sensors (10) via at least one conductor track (3b).

**3.** The electric battery (20) according to Claim 1 or 2, wherein each first insulated region (5a) is in each case thermally conductively connected to a corresponding second insulated region (5b) via a plurality of plated-through holes (4).

**4.** The electric battery (20) according to at least one of the preceding claims, wherein:

the printed circuit board (1) is manufactured from a plastic, a fiber-reinforced plastic or a flame-retardant and flame-retardant composite material consisting of epoxy resin and glass fiber fabric; and/or
the temperature measuring device (10) furthermore has a plurality of fastening means (12) for fastening the printed circuit board (1) on a battery (20).

**5.** The electric battery (20) according to at least one of the preceding claims, wherein the temperature sensors (2) are in each case surrounded by a thermally conductive jacket, which is thermally conductively connected to the respective first insulated region (5a).

**6.** The electric battery (20) according to at least one of the preceding claims, wherein the printed circuit board (1) has a plurality of milled-out portions (14).

**7.** The electric battery (20) according to Claim 1, wherein:

> the battery (20) has a plurality of rows of individual cells (21) arranged next to one another; and each of the plurality of temperature sensors (2) is provided for measuring the temperature of a plurality of individual cells (21) from adjacent rows.

**8.** The electric battery (20) according to Claim 1 or 7, wherein the individual temperatures measured by the temperature sensors (2) are determined ratiometrically.

**9.** The electric battery (20) according to at least one of the preceding claims, wherein a composite tape (30) is arranged on an upper side of the temperature measuring device (10).

**10.** The electric battery (20) according to at least one of the preceding claims, wherein the plurality of plated-through holes (4) is arranged between a third insulated region (5c) on the upper conductor layer (1a) and the second insulated region (5b), wherein the third insulated region (5c) is in each case arranged offset next to a temperature sensor (2).

## Revendications

**1.** Batterie électrique (20) comprenant une pluralité de cellules individuelles (21), la batterie (20) comprenant au moins un dispositif de mesure de température (10), l'au moins un dispositif de mesure de température (10) comprenant :

> une carte de circuit imprimé multicouche (1) en tant qu'élément de support avec une couche conductrice supérieure (1a) et une couche conductrice inférieure (1b) ;
> une pluralité de capteurs de température (2) qui sont respectivement configurés pour générer un signal de mesure dépendant de la température ;
> une borne multipolaire (11) pour lire les signaux de mesure, dans laquelle :

>> chacun de la pluralité de capteurs de température (2) est respectivement disposé sur une première zone isolée (5a) de la couche conductrice supérieure (1a) ;
>> la couche conductrice inférieure (1b) comprend pour chaque capteur de température (2) une deuxième zone isolée (5b) en tant que surface de contact thermique;
>> chaque première zone isolée (5a) est respectivement reliée de manière thermoconductrice à une deuxième zone isolée correspondante (5b) par le biais d'au moins un trou d'interconnexion (4),
les deuxièmes zones isolées (5b) étant respectivement en contact thermoconducteur avec au moins un connecteur de cellule (22) de la batterie (20).

**2.** Batterie électrique (20) selon la revendication 1, dans laquelle la borne multipolaire (11) comprend :

> une pluralité de pôles de signal qui sont respectivement reliés électriquement à l'un de la pluralité de capteurs de température (10) par le biais de pistes conductrices séparées (3a) dans la couche conductrice supérieure (1a) ; et
> au moins un pôle de masse qui est relié électriquement à chacun de la pluralité de capteurs de température (10) par le biais d'au moins une piste conductrice (3b).

**3.** Batterie électrique (20) selon la revendication 1 ou 2, dans laquelle chaque première zone isolée (5a) est respectivement reliée de manière thermoconductrice à une deuxième zone isolée correspondante (5b) par le biais d'une pluralité de trous d'interconnexion (4).

**4.** Batterie électrique (20) selon au moins l'une quelconque des revendications précédentes, dans laquelle :

> la carte de circuit imprimé (1) est fabriquée à partir d'une matière plastique, d'une matière plastique renforcée par des fibres ou d'un matériau composite difficilement inflammable et ignifuge constitué de résine époxy et de tissu de fibres de verre ; et/ou
> le dispositif de mesure de température (10) comprend en outre une pluralité de moyens de fixation (12) pour fixer la carte de circuit imprimé (1) sur une batterie (20).

**5.** Batterie électrique (20) selon au moins l'une quelconque des revendications précédentes, dans laquelle les capteurs de température (2) sont respectivement entourés par une enveloppe thermoconductrice qui est reliée de manière thermoconductrice à la première zone isolée respective (5a).

**6.** Batterie électrique (20) selon au moins l'une quelconque des revendications précédentes, dans laquelle la carte de circuit imprimé (1) comprend une pluralité de fraisures (14).

**7.** Batterie électrique (20) selon la revendication 1, dans laquelle :

> la batterie (20) comprend une pluralité de rangées de cellules individuelles (21) disposées les unes à côté des autres ; et

chacun de la pluralité de capteurs de température (2) est prévu pour mesurer la température d'une pluralité de cellules individuelles (21) de rangées adjacentes.

8. Batterie électrique (20) selon la revendication 1 ou 7, dans laquelle les températures individuelles mesurées par les capteurs de température (2) sont déterminées de manière ratiométrique.

9. Batterie électrique (20) selon au moins l'une quelconque des revendications précédentes, dans laquelle une bande composite (30) est disposée sur un côté supérieur du dispositif de mesure de température (10).

10. Batterie électrique (20) selon au moins l'une quelconque des revendications précédentes, dans laquelle la pluralité de trous d'interconnexion (4) est disposée entre une troisième zone isolée (5c) sur la couche conductrice supérieure (1a) et la deuxième zone isolée (5b), la troisième zone isolée (5c) étant respectivement disposée de manière décalée à côté d'un capteur de température (2).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207334 A1
- EP 2736100 B1
- WO 2016153267 A1
- KR 1020180043875 A
- WO 2015019511 A1
- US 2010203368 A1
- EP 1450422 A1
- CN 100472877 C